# EUROPÄISCHE PATENTSCHRIFT

(11) **EP 1 309 231 B1**
(45) Veröffentlichungstag und Bekanntmachung des Hinweises auf die Patenterteilung: **09.08.2006**
(21) Anmeldenummer: 02022813.6
(22) Anmeldetag: 12.10.2002
(51) Int. Cl.: H05B 41/292, H05B 39/04

(54) **Stromversorgungseinrichtung zum getakteten Betrieb einer 12-V-Halogenlampe in einem Kraftfahrzeug mit 42-V-Bordnetz**
Switching power supply for a 12V Halogen lamp in a vehicle with a 42V network
Disposif pour l'alimentation en courant alterné d'une lampe à halogène 12V à partir d'un réseau 42V de véhicule

(30) Priorität: 24.10.2001 DE 10152473
(43) Veröffentlichungstag der Anmeldung: 07.05.2003
(73) Patentinhaber: Hella KGaA Hueck & Co., 59552 Lippstadt (DE)
(72) Erfinder: Daub, Wolgang, 59609 Anröchte (DE)

(56) Entgegenhaltungen:
- EP-A- 1 005 256
- DE-A- 10 153 382
- DE-U- 29 921 824
- US-A- 5 498 933
- ANONYMOUS: "PWM von 14v Kfz-Lampen an hherer spannung" RESEARCH DISCLOSURE, KENNETH MASON PUBLICATIONS, HAMPSHIRE, GB, Bd. 431, Nr. 58, März 2000 (2000-03), XP007125719 ISSN: 0374-4353

## Beschreibung

Die Erfindung betrifft eine Stromversorgungseinrichtung zum getakteten Betrieb einer 12V-Halogenlampe in einem Kraftfahrzeug mit einem 42V-Bordnetz, wobei die 12-V-Halogenlampe von einem Lampenreflektor umgeben ist und ihre Versorgungsspannung über einen Lampenstecker zugeführt erhält.

Normalerweise kann eine 12V-Halogenlampe nicht ohne weiteres getaktet an einem 42V-Bordnetz betrieben werden, da die elektrische Feldstärke in der Wendel so groß ist, daß es zu Spannungsüberschlägen in der Wendel kommt und die Lampe vorzeitig altert. Durch das Takten und erst recht durch die Spannungsüberschläge kommt es überdies zu erheblichen elektromagnetischen Störaussendungen.

Der getaktete Betrieb einer Niedervolt-Halogenlampe in einem 42V-Bordnetz ist beispielsweise aus der folgenden anonymen Publikation bekannt: "PWM von 14V Kfz-Lampen an höherer Spannung" Research Disclosure, Kenneth Mason Publications, Hampshire, GB, Bd.431, Nr. 58, März 2000 (2000-03), XP007 1257 19 ISSN 0374-4353.

Aus der EP 1 005 256 A1 sowie der DE 299 21 824 U1 ist es bekannt, einen Spannungswandler für eine getaktete Spannungsversorgung der Halogenlampe am Lampengehäuse der Halogenlampe anzuordnen.

Aus dem Dokument US 5, 498,933 ist es bekannt, den Reflektor einer Gasentladungslampe mit dem negativen Massepotential zu verbinden

Es ist daher die Aufgabe der Erfindung, eine Stromversorgungseinrichtung zu schaffen, welche die vorgenannten Probleme nicht aufweist.

Diese Aufgabe wird erfindungsgemäß dadurch gelöst, daß ein getakteter Schalter im Lampenstecker angeordnet ist und daß der Lampenreflektor mit dem negativen Massepotential des Kraftfahrzeugs verbunden ist. Hierdurch werden beide vorgenannten Probleme gleichzeitig gelöst.

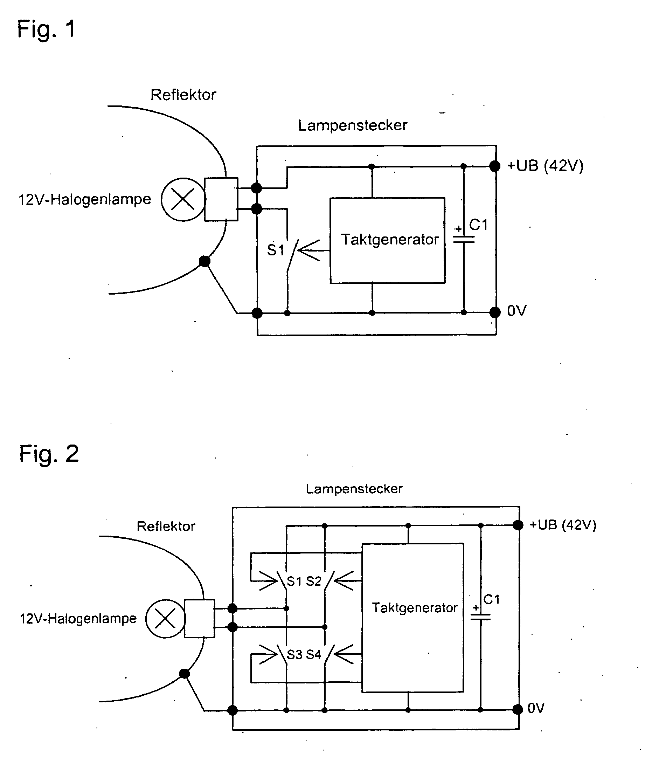

Zwei Ausführungsbeispiele der erfindungsgemäßen Stromversorgungseinrichtung sind in der Zeichnung dargestellt, wobei in der Figur 1 der getaktete Schalter als Low-Side-Schalter und in der Figur 2 als H-Brückenschaltung ausgeführt ist.

Der getaktete Schalter ist in beiden Fällen jeweils im Lampenstecker untergebracht. Hierdurch sind die Leitungen, über die der getaktete Lampenstrom fließt so kurz, daß keine Antennenwirkung zu befürchten ist.

In der Figur 1 ist der getaktete Schalter ein Low-Side-Schalter (vereinfacht dargestellt durch einen mit S1 bezeichneten Schalter, der durch einen Taktgenerator angesteuert wird), und der Reflektor ist mit dem Massepotential des Kraftfahrzeugs verbunden. Ein parallel zur Bordnetzspannung geschalteter Glättungskondensator C1 verhindert eine Rückwirkung des getakteten Stroms auf das Bordnetz.

Die Lampenwendel ist in diesem Fall während des Betriebes immer mit der Bordnetzspannung +UB von 42V verbunden. Da das Reflektorpotential 0V beträgt, bildet sich zwischen Reflektor und Wendel ein elektrisches Feld, wobei an der Wendel die Feldstärke am höchsten ist. Dieses Feld wirkt gegen die aus der Wendel austretenden Elektronen und verdichtet die ausgetretenen Elektronen zu einer dichten Wolke. Obwohl während der Einschaltphase des Low-Side-Schalters zwischen den Windungen der Wendel ein starkes elektrisches Feld anliegt, können nur relativ wenige freie Elektronen so beschleunigt werden, daß sie auf die Wendel stürzen, weil die Elektronenwolke die Wendel abschirmt. Die Spannungsüberschläge treten dadurch seltener auf und die Lampe altert weniger schnell. Außerdem werden die elektromagnetischen Störaussendungen der Lampe vom Reflektor abgeschirmt, da dieser mit der Fahrzeugmasse verbunden ist.

In der Figur 2 ist der getaktete Schalter als H-Brückenschaltung (symbolisch dargestellt durch vier Brückenschalter S1, S2, S3 und S4, die durch einen Taktgenerator angesteuert werden) ausgeführt. Der Reflektor ist mit dem Massepotential des Kraftfahrzeugs verbunden. Die zuvor beschriebene Wirkungsweise ist hier ebenfalls gegeben. Allerdings liegt nur während der Einschaltphase ein elektrisches Feld zwischen der Wendel und dem Reflektor. Vorteilhaft ist, daß die Lampe mit Wechselstrom betrieben wird, wodurch sich mögliche Überschläge auf beide Seiten einer jeden Windung verteilen und die Lampe nicht einseitig geschädigt wird.

## Patentansprüche

1. Stromversorgungseinrichtung zum getakteten Betrieb einer 12V-Halogenlampe in einem Kraftfahrzeug mit einem 42V-Bordnetz, wobei die 12-V-Halogenlampe von einem Lampenreflektor umgeben ist und ihre Versorgungsspannung über einen Lampenstecker zugeführt erhält,
**dadurch gekennzeichnet,**
**daß** ein getakteter Schalter im Lampenstecker angeordnet ist und daß der Lampenreflektor mit dem negativen Massepotential des Kraftfahrzeugs verbunden ist.

2. Stromversorgungseinrichtung nach Anspruch 1, **dadurch gekennzeichnet, daß** der getaktete Schalter als Low-Side-Schalter ausgeführt ist.

3. Stromversorgungseinrichtung nach Anspruch 1, **dadurch gekennzeichnet, daß** der getaktete Schalter als H-Brückenschaltung ausgeführt ist.

## Claims

1. Power supply device for pulsed operation of a 12 V halogen lamp in a motor vehicle with a 42 V electrical system, wherein the 12 V halogen lamp is surrounded by a lamp reflector and receives its power via a lamp plug,
**characterized in that**
a clocked switch is arranged in the lamp plug and **in that** the lamp reflector is connected to the negative chassis earth of the motor vehicle.

2. Power supply device according to Claim 1, **characterized in that** the clocked switch is configured as a low-side switch.

3. Power supply device according to Claim 1, **characterized in that** the clocked switch is configured as an H-bridge circuit.

## Revendications

1. Dispositif d'alimentation à découpage pour une lampe à halogène 12 V à partir d'un réseau 42V d'un véhicule, où la lampe à halogène 12 V est entourée d'un réflecteur et reçoit sa tension d'alimentation par l'intermédiaire d'une douille de lampe.
**caractérisé en ce qu'**un commutateur synchronisé est disposé dans la douille de lampe et que le réflecteur est relié au potentiel de masse négatif du véhicule.

2. Dispositif d'alimentation en courant selon la revendication 1, **caractérisé en ce que** le commutateur synchronisé est réalisé sous la forme d'un commutateur basse tension.

3. Dispositif d'alimentation en courant selon la revendication 1, **caractérisé en ce que** le commutateur synchronisé est réalisé sous la forme d'un circuit en pont en H.
